# EUROPEAN PATENT APPLICATION

(11) **EP 3 979 696 A1**
(43) Date of publication of application: **06.04.2022**
(21) Application number: 19930720.8
(22) Date of filing: 24.05.2019
(51) Int. Cl.: H04W 28/18

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/020758
(87) International publication number: WO 2020/240633

(57) **Abstract**

A user terminal according to one aspect of the present disclosure is characterized by having a receiving section that receives information on a group corresponding to at least one of a Transmission Configuration Indication state (TCI state) and a spatial relation (TCI state/spatial relation), and a control section that assumes that TCI states/spatial relations for all cells or Bandwidth Parts (BWPs) belonging to certain group are also updated when a TCI state/spatial relation for a given cell or a BWP belonging to the group is updated. According to one aspect of the disclosure, it is possible to suppress increases in overhead required for notification of the TCI state, spatial relation and the like.

## Description

### Technical Field

The present disclosure relates to a user terminal and radio communication method in the next-generation mobile communication system.

### Background Art

In Universal Mobile Telecommunications System (UMTS) networks, for the purpose of higher data rates, low delay and the like, Long Term Evolution (LTE) has been specified (Non-patent Document 1). Further, for the purpose of higher capacity, more sophistication and the like than LTE (Third Generation Partnership Project (3GPP) Release (Rel.) 8, 9), LTE-Advanced (3GPP Rel. 10-14) has been specified.

Successor systems (e.g., also referred to as 5th generation mobile communication system (5G), 5G+ (plus), New Radio (NR), 3GPP Rel.15 onward, etc.) to LTE have also been studied.

### Prior Art Document

### Non-patent Document

[Non-patent Document 1] 3GPP TS 36.300V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Disclosure of Invention

### Problems to be Solved by the Invention

In Rel-15 NR, a user terminal (User Equipment (UE)) receives information to select one from among configured Transmission Configuration Indication states (TCI states), and based on the information, determines a TCI state to apply to a given channel/signal.

For example, in Rel-15 NR, it is necessary to activate (or indicate) the TCI state using one MAC CE for each pair of a cell and a Bandwidth Part (BWP) . Therefore, when the number of cells and the number of BWPs configured for a UE are high, there is a problem with communication overhead for TCI state signaling. In other words, in conforming to previous NR specifications, there is the risk that increases in communication throughput are suppressed.

Therefore, in the present disclosure, it is an object to provide a user terminal and radio communication method capable of suppressing increases in overhead required for notification of the TCI state, spatial relation and the like.

### Means for Solving the Problem

A user terminal according to one aspect of the present disclosure is characterized by having a receiving section that receives information on a group corresponding to at least one of a Transmission Configuration Indication state (TCI state) and a spatial relation (TCI state/spatial relation), and a control section that assumes that TCI states/spatial relations for all cells or Bandwidth Parts (BWPs) belonging to certain group are also updated when a TCI state/spatial relation for a given cell or a BWP belonging to the group is updated.

### Advantageous Effect of the Invention

According to one aspect of the present disclosure, it is possible to suppress increases in overhead required for notification of the TCI state, spatial relation and the like.

### Brief Description of Drawings

FIG. 1 is a diagram showing one example of grouping of CCs related to a TCI state;
FIG. 2 is a diagram showing another example of grouping of CCs related to the TCI state;
FIG. 3 is a diagram showing one example of RRC information elements related to the TCI state;
FIG. 4 is a diagram showing one example of a schematic configuration of a radio communication system according to one Embodiment;
FIG. 5 is a diagram showing one example of a configuration of a base station according to one Embodiment;
FIG. 6 is a diagram showing one example of a configuration of a user terminal according to one Embodiment; and
FIG. 7 is a diagram showing one example of hardware configurations of the base station and user terminal according to one Embodiment.

### Best Mode for Carrying Out the Invention

### (TCI, Spatial relation, QCL)

In NR, it is studied to control reception processing (e.g., at least one of reception, demapping, demodulation and decoding) and transmission processing (e.g., at least one of transmission, mapping, precoding, modulation and coding) of at least one of a signal and a channel (expressed as signal/channel) in a UE, based on a Transmission Configuration Indication state (TCI state).

The TCI state may express information applied to a downlink signal/channel. Information corresponding to the TCI state applied to an uplink signal/channel may be expressed as spatial relation.

The TCI state is information about Quasi-Co-Location (QCL) of the signal/channel, and may be called a spatial reception parameter, spatial relation information (SRI) and the like. The TCI state may be configured on a UE for each channel or for each signal.

The QCL is an indicator indicative of statistical properties of the signal/channel. For example, in the case where certain signal/channel and another signal/channel are in a QCL relationship, in between these different signals/channels, the case may mean that it is possible to assume that at least one of Doppler shift, Doppler spread, average delay, delay spread, and spatial parameter (e.g., spatial reception parameter (spatial Rx parameter)) is the same (with respect to at least one of these types of information, QCL holds).

In addition, the spatial Rx parameter may correspond to a reception beam (e.g., reception analog beam) of the UE, or a beam may be identified based on spatial QCL. The QCL (or at least one element of QCL) in the present disclosure may be read with s QCL (spatial QCL).

With respect to QCL, a plurality of types (QCL types) may be defined. For example, 4 QCL types A-D may be configured where parameters (or parameter sets) assumed to be the same are different, and the parameters will be described below:
• QCL-Type-A (QCL-A) : Doppler shift, Doppler spread, average delay and delay spread;
QCL-Type-B (QCL-B): Doppler shift and Doppler spread;
QCL-Type-C (QCL-C): Doppler shift and average delay; and
• QCL-Type-D (QCL-D): Spatial reception parameter.

It may be called QCL assumption that a UE assumes that a given control resource set (Control Resource Set (CORESET)), channel or reference signal is in a particular QCL (e.g., QCL-Type-D) relationship with another CORESET, channel or reference signal.

Based on the TCI state or QCL assumption of a signal/channel, the UE may determine at least one of a transmission beam (Tx beam) and a reception beam (Rx beam) of the signal/channel.

For example, the TCI state may be information about QCL between a target channel (in other words, reference signal (RS) for the channel) and another signal (e.g., another reference signal (RS)). The TCI state may be configured (indicated) by higher layer signaling, physical layer signaling, or a combination thereof.

In the present disclosure, for example, the higher layer signaling may be one of Radio Resource Control (RRC) signaling, Medium Access Control (MAC) signaling and broadcast information, or a combination thereof.

For example, the MAC signaling may use MAC Control Element (MAC CE), MAC Protocol Unit (PDU) and the like. For example, the broadcast information may be Master Block Information (MIB), System Information Block (SIB), Remaining Minimum System Information (RMSI), Other System Information (OSI) and the like.

For example, the physical layer signaling may be Downlink Control Information (DCI).

For example, a channel configured (designated) for the TCI state or spatial relation may be at least one of a downlink shared channel (Physical Downlink Shared Channel (PDSCH)), downlink control channel (Physical Downlink Control Channel (PDCCH)), uplink shared channel (Physical Uplink Shared Channel (PUSCH)), and uplink control channel (Physical Uplink Control Channel (PUCCH)).

Further, for example, an RS to be the QCL relationship with the channel may be at least one of Synchronization Signal Block (SSB), Channel State Information Reference Signal (CSI-RS), Sounding Reference Signal (SRS), Tracking CSI-RS (also called Tracking Reference Signal (TRS)), QCL DetectionReference Signal (also called QRS) and the like.

The SSB is a signal block including at least one of Primary Synchronization Signal (PSS), Secondary Synchronization Signal (SSS), and broadcast channel (Physical Broadcast Channel (PBCH)). The SSB may be called an SS/PBCH block.

An information element ("TCI-state IE" of RRC) of the TCI state configured by the higher layer signaling may include one or a plurality of pieces of QCL information ("QCL-Info"). The QCL information may include at least one of information (RS relation information) about the RS to be the QCL relationship and information (QCL type information) indicative of the QCL type. The RS relation information may include information on an index of the RS (e.g., SSB index, Non-Zero-Power (NZP) CSI-RS resource ID (Identifier)), an index of a cell in which the RS is positioned, an index of a Bandwidth Part (BWP) in which the RS is positioned and the like.

In Rel. 15 NR, as the TCI state for at least one of the PDCCH and PDSCH, the UE is capable of being configured for both of the RS of QCL-Type-A and the RS of QCL-Type-D, or only the RS of QCL-Type-A.

In the case of configuring the TRS as the RS of QCL-Type-A, as distinct from a DMRS for the PDCCH or PDSCH, it is assumed that the same TRS is transmitted periodically for a long time. The UE measures the TRS, and is capable of calculating the average delay, delay spread the like.

In the TCI state for the DMRS for the PDCCH or PDSCH, as the RS of QCL-Type-A, the UE configured for the TRS is capable of assuming that the DMRS of the PDCCH or PDSCH is the same as the parameter (average delay, delay spread, etc.) of the TRS of QCL-Type-A, and therefore, from a measurement result of the TRS, is capable of obtaining the parameter (average delay, delay spread, etc.) of the DMRS of the Type-A of the PDCCH or PDSCH. In performing channel estimation of at least one of the PDCCH and PDSCH, using the measurement result of the TRS, the UE is capable of performing channel estimation with higher accuracy.

The UE configured for the RS of QCL-Type-D is capable of determining a UE reception beam (spatial domain reception filter, UE spatial domain reception filter), using the RS of QCL-Type-D.

### <TCI state for PDCCH>

Information on QCL between the PDCCH (or DeModuation Reference Signal (DMRS) antenna port related to the PDCCH) and a given RS may be called the TCI state for the PDCCH and the like.

The UE may determine the TCI state for a UE-specific PDCCH (CORESET), based on higher layer signaling. For example, the UE may be configured for one or a plurality of (K) TCI states for each CORESET by RRC signaling.

In the UE, for each CORESET, one of a plurality of TCI states configured by the RRC signaling may be activated by MAC CE. The MAC CE may be called TCI State Indication for UE-specific PDCCH MAC CE. The UE may perform monitoring of a CORESET, based on an active TCI state that corresponds to the CORESET.

### <TCI state for PDSCH>

Information on QCL between the PDSCH (or DMRS antenna port related to the PDSCH) and a given RS may be called the TCI state for the PDSCH and the like.

The UE may be notified of (configured for) M (M≥1) TCI states (QCL information for M PDSCHs) for the PDSCH by the higher layer signaling. In addition, the number M of TCI states configured on the UE may be limited by at least one of UE capability and the QCL type.

The DCI used in scheduling of a PDSCH may include a given field (e.g., which may be called a TCI field, TCI state field, etc.) indicative of the TCI state for the PDSCH. The DCI may be used in scheduling of PDSCHs of one cell, and for example, may be called DL DCI, DL assignment, DCI format 1_0, DCI format 1_1 and the like.

Whether or not the TCI field is included in the DCI may be controlled by information notified from the base station to the UE. The information may be information (e.g., TCI-Present information, TCI-Present In DCI information, hither layer parameter TCI-Present In DCI) indicating whether or not the TCI field is present (present or absent) in the DCI. For example, the information may be configured on the UE by the higher layer signaling.

In the case where TCI states exceeding 8 types are configured on the UE, using the MAC CE, TCI states of 8 types or less may be activated (designated) . The MAC CE may be called TCI States Activation/Deactivation for UE-specific PDSCH MAC CE. A value of the TCI field in the DCI may indicate one of TCI states activated by the

### MAC CE.

In the case where the UE is configured for the TCI-Present information set to be "enabled" with respect to the CORESET (CORESET used in PDCCH transmission to schedule the PDSCH) for scheduling the PDSCH, the UE may assume that the TCI field is present in DCI format 1_1 of the PDCCH transmitted on the CORESET.

In the case where the TCI-Present information is not configured for the CORESET for scheduling a PDSCH or the PDSCH is scheduled by DCI format 1_0, when a time offset is a threshold or more between reception of the DL DCI (DCI for scheduling the PDSCH) and reception of the PDSCH corresponding to the DCI, in order to determine QCL of the PDSCH antenna port, the UE may assume that the TCI state or QCL assumption for the PDSCH is the same as the TCI state or QCL assumption applied to the CORESET used in PDCCH transmission for scheduling the PDSCH.

In addition, the CORESET-ID may be an ID (ID for identification of the CORESET) configured by the RRC information element (Control Resource Set).

### <Spatial relation for PUCCH>

The UE may be configured for a parameter (PUCCH configuration information, PUCCH-Config) used in PUCCH transmission by higher layer signaling (e.g., Radio Resource Control (RRC) signaling). The PUCCH configuration information may be configured for each partial band (e.g., uplink Bandwidth Part (BWP)) in a carrier (also referred to as a cell, Component Carrier (CC)).

The PUCCH configuration information may include a list of PUCCH resource set information (e.g., PUCCH-Resource Set) and a list of PUCCH spatial relation information (e.g., PUCCH-Spatial Relation Info).

The PUCCH resource set information may include a list (e.g., resource List) of PUCCH resource indexes (ID, e.g., PUCCH-Resource Id).

Further, in the case where the UE does not have dedicated PUCCH resource configuration information (e.g., dedicated PUCCH resource configuration) provided by PUCCH resource information in the PUCCH configuration information (before RRC setup), based on a parameter (e.g., pucch-Resource Common) in the system information (e.g., System Information Block Type 1 (SIB1) or Remaining Minimum System Information (RMS1)), the UE may determine a PUCCH resource set. The PUCCH resource set may include 16 PUCCH resources.

On the other hand, in the case where the UE has the above-mentioned dedicated PUCCH resource configuration information (UE-dedicated uplink control channel configuration, dedicated PUCCH resource configuration) (after RRC setup), the UE may determine the PUCCH resource set according to the number of UCI information bits.

Based on at least one of a value of a given field (e.g., PUCCH resource indicator field) in Downlink Control Information (DCI) (e.g., DCI format 1_0 or 1_1 used in scheduling of the PDSCH), the number of CCEs (N_{CCE}) in the control resource set (COntrol REsource SET (CORESET)) for PDCCH reception carrying the DCI, and an index (n_{CCE,0}) of a beginning (first) CCE of the PDCCH reception, the UE may determine one PUCCH resource (index) in the above-mentioned PUCCH resource set (e.g., PUCCH resource set determined specific to the cell or dedicated to the UE).

The PUCCH spatial relation information (e.g., "PUCCH-spatial Relation Info" of RRC information element) may indicate a plurality of candidate beams (spatial domainfilter) for PUCCH transmission. The PUCCH spatial relation information may indicate spatial relationship between the RS (Reference Signal) and the PUCCH.

In addition, in the present disclosure, the index, ID, indicator, resource ID and the like may be read with one another.

The list of the PUCCH spatial relation information may include certain elements (PUCCH Spatial Relation Information IE (Information Element)). For example, each PUCCH spatial relation information may include at least one of an index (ID, e.g., pucch-Spatial Relation Info ld) of the PUCCH spatial relation information, an index (ID, e.g., serving Cell Id) of the serving cell, and information on an RS (reference RS) to be the spatial relation to the PUCCH.

For example, the information on the RS may be an SSB index, CSI-RS index (e.g., NZP-CSI-RS resource configuration ID), or SRS resource ID and ID of the BWP. The SSB index, CSI-RS index and SRS resource ID may be associated with at least one of a beam, resource and port selected by measurement of the corresponding RS.

In the case where SRIs more than one are configured in relation to the PUCCH, based on PUCCH spatial relation Activation/Deactivation MAC CE, the UE may control so that one PUCCH SRI is active with respect to one PUCCH resource at certain time.

The PUCCH spatial relation Activation/Deactivation MAC CE of Rel-15 NR is represented by total 3 octets (8 bitsx3=24 bits) of Octets (OCTs) 1 to 3.

The MAC CE may include information on a serving cell ID ("Serving Cell ID" field) targeted for application, BWP ID ("BWP ID" field), PUCCH resource ID ("PUCCH Resource ID" field) and the like.

Further, the MAC CE includes a field of "Sᵢ" (i=0 to 7). In the case where the field of certain Sᵢ indicates "1", the UE activates the SRI of SRI ID#i. In the case where the field of certain Sᵢ indicates "0", the UE deactivates the SRI of SRI ID#i.

### <Spatial relation for SRS and PUSCH>

The UE may receive information (SRS configuration information, for example, parameter in "SRS-Config" of the RRC control element) used in transmission of a measurement reference signal (e.g., Sounding Reference Signal (SRS)).

Specifically, the UE may receive at least one of information on one or a plurality of SRS resource sets (SRS resource set information, for example, "SRS-Resource Set" of the RRC control element), and information on one or a plurality of SRS resources (SRS resource information, for example, "SRS-Resource" of the RRC control element) .

One SRS resource set may be related to the given number of SRS resources (the given number of SRS resources may be grouped.) Each SRS resource may be identified by an SRS Resource Indicator (SRI) or SRS resource ID (Identifier).

The SRS resource set information may include an SRS resource set ID (SRS-Resource Set Id), a list of SRS resource IDs (SRS-Resource Ids) used in the resource set, an SRS resource type (e.g., one of Periodic SRS, Semi-Persistent SRS and Aperiodic SRS), and information on usage of the SRS.

Herein, the SRS resource type may indicate one of Periodic SRS (P-SRS), Semi-persistent SRS (SP-SRS), and Aperiodic SRS (A-SRS) . In addition, the UE may transmit the P-SRS and SP-SRS periodically (or after activating, periodically), and based on an SRS request of DCI, transmit the A-SRS.

Further, for example, the usage ("usage" of the RRC parameter, "SRS-Set Use" of L1 (Layer 1) parameter) may be beam Management, codebook (CB), noncodebook (NCB), antenna switching and the like. The SRS for usage of the codebook or noncodebook may be used in determination of a precoder of PUSCH transmission on a codebook basis or noncodebook basis based on the SRI.

For example, in the case of codebook-based transmission, based on the SRI, Transmitted Rank Indicator (TRI) and Transmitted Precoding Matrix Indicator (TPMI), the UE may determine a precoder for PUSCH transmission. In the case of noncodebook-based transmission, based on the SRI, the UE may determine a precoder for PUSCH transmission.

The SRS resource information may include the SRS resource ID (SRS-Resource Id), the number of SRS ports, SRS port number, transmission Comb, SRS resource mapping (e.g., time and/or frequency resource position, resource offset, periodicity of the resource, the number of repetitions, the number of SRS symbols, SRS bandwidth, etc.), hopping relation information, SRS resource type, sequence ID, spatial relation information on SRS and the like.

The spatial relation information on SRS (e.g., "spatial Relation Info" of the RRC information element) may indicate information on spatial relation between a given reference signal and the SRS. The given reference signal may be at least one of a Synchronization Signal/Physical Broadcast Channel (SS/PBCH) block, Channel State Information Reference Signal (CSI-RS) and the SRS (or, anotherSRS) . The SS/PBCH block may be called the Synchronization Signal Block (SSB).

The spatial relation information on SRS may include at least one of the SSB index, CSI-RS resource ID and SRS resource ID, as an index of the above-mentioned given reference signal.

In addition, in the present disclosure, the SSB index, SSB resource ID and SSBRI (SSB Resource Indicator) may be read with one another. Further, the CSI-RS index, CSI-RS resource ID and CRI (CSI-RS Resource Indicator) may be read with one another. Furthermore, the SSB index, SRS resource ID and SRI may be read with one another.

The spatial relation information on SRS may include a serving cell index that corresponds to the above-mentioned reference signal, BWP index (BWP ID) and the like.

In NR, transmission of an uplink signal may be controlled based on the presence or absence of Beam Correspondence (BC). For example, the BC may be a capability that certain node (e.g., base station or UE) determines a beam (transmission beam, Tx beam) used in transmission of a signal, based on a beam (reception beam, Rx beam) used in reception of a signal.

In addition, the BC may be called transmission/reception beam correspondence (Tx/Rx beam correspondence), beam reciprocity, beam calibration, Calibrated/Non-calibrated, reciprocity calibrated/non-calibrated, correspondence degree, matching degree and the like.

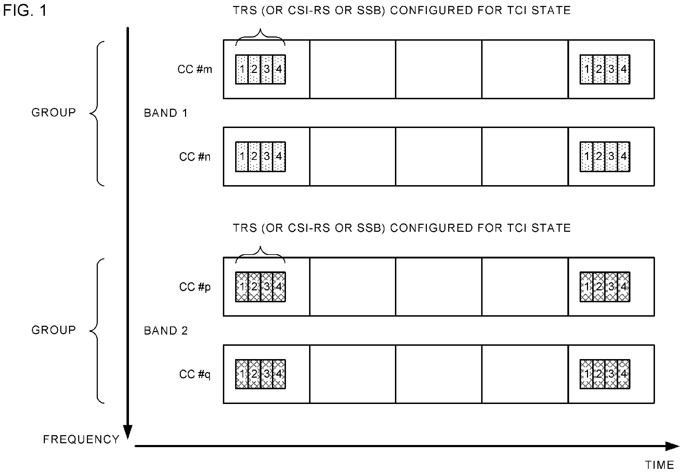

As shown in FIG. 1, in the BC, a gNB performs transmission beam sweeping using beams B21 to B24, a UE performs reception beam sweeping using beams b1 to b4, and based on measurement results, the gNB and UE thereby determine that the beam B22 of the gNB is a DL transmission beam and determine that the beam b2 of the UE is a DL reception beam. The gNB uses the determined beam B22 also as a UL reception beam, and the UE uses the determined beam b2 also as a UL transmission beam.

For example, in the case of the absence of the BC, the UE may transmit an uplink signal (e.g., PUSCH, PUCCH, SRS, etc.), using the same beam (spatial domain transmission filter) as the SRS (or SRS resource) indicated from the base station based on a measurement result of one or more SRSs (or SRS resources).

On the other hand, in the case of the presence of the BC, the UE may transmit an uplink signal (e.g., PUSCH, PUCCH, SRS, etc.), using the same or corresponding beam (spatial domain transmission filter) as/to a beam (spatial domain reception filter) used in reception of a given SSB or CSI-RS (or CSI-RS resource).

With respect to certain SRS resource, in the case where the UE is configured for spatial relation information on an SSB or CSI-RS, and an SRS (e.g., in the case of the presence of the BC), the UE may transmit the SRS resource using the same spatial domain filter (spatial domain transmission filter) as a spatial domain filter (spatial domain reception filter) for reception of the SSB or CSI-RS. In this case, the UE may assume that a UE reception beam of the SSB or CSI-RS is the same as a UE transmission beam of the SRS.

With respect to certain SRS (target SRS) resource, in the case where the UE is configured for spatial relation information on another SRS (reference SRS) and the SRS (target SRS) (e.g., in the case of the absence of the BC), the UE may transmit the target SRS resource using the same spatial domain filter (spatial domain transmission filter) as a spatial domain filter (spatial domain transmission filter) for transmission of the reference SRS. In other words, in this case, the UE may assume that a UE transmission beam of the reference SRS is the same as a UE transmission beam of the target SRS.

Based on a value of a given field (e.g., SRS resource identifier (SRI) field) in DCI (e.g., DCI format 0_1), the UE may determine a spatial relation of a PUSCH scheduled by the DCI. Specifically, the UE may use, in PUSCH transmission, spatial relation information (e.g., "spatial Relation Info" of the RRC information element) on SRS resources determined based on the value (e.g., SRI) of the given field.

With respect to the PUSCH, in the case of using codebook-based transmission, in the UE, two SRS resources may be configured by RRC, and one of two SRS resources may be indicated by DCI (given field of 1 bit). With respect to the PUSCH, in the case of using noncodebook-based transmission, in the UE, four SRS resources may be configured by RRC, and one of four SRS resources may be indicated by DCI (given field of 2 bits) . In order to use the spatial relation except two or four spatial relations configured by the RRC, RRC reconfiguration is required.

In addition, it is possible to configure DL-RS with respect to the spatial relation of SRS resources used in the PUSCH. For example, with respect to SP-SRS, the UE is capable of being configured for the spatial relation of a plurality of (e.g., up to 16) SRS resources by the RRC, and one of a plurality of SRS resources is capable of being indicated by the MAC CE.

### <Method of determining the spatial relation>

As described previously, with respect to the PDCCH or PDSCH, from among a plurality of TCI states configured by the RRC, one or more TCI states are activated or indicated to the UE.

Herein, the TCI States Activation/Deactivation for UE-specific PDSCH MAC CE in Rel-15 NR includes a serving cell ID field to identify a serving cell for applying the MAC CE, and a BWP ID field to indicate the BWP for applying the MAC CE.

Further, the TCI States Activation/Deactivation for UE-specific PDSCH MAC CE in Rel-15 NR includes a serving cell ID field to identify a serving cell for applying the MAC CE, and a CORESET ID field to indicate the CORESET for applying the MAC CE. Since one or a plurality of CORESETs is configured per BWP, the CORESET designated by the MAC CE may correspond to a CORESET included in an active BWP.

Accordingly, in Rel-15 NR, it is necessary to activate (or indicate) the TCI state using one MAC CE for each pair of a cell (in other words, CC) and a BWP (by extension, CORESET), and when the number of cells, the number of BWPs and the like configured on a UE are high, there is a problem with communication overhead for these MAC CEs.

Therefore, in conforming to previous NR specifications, there is the risk that increases in communication throughput are suppressed.

Then, the inventors of the present invention conceived making a plurality of pairs of CC/BWP as one set, and selecting (may be read with indicating, activating, etc.) the set by MAC CE.

According to one aspect of the present disclosure, it is possible to collectively designate the TCI state using one MAC CE, with respect to a plurality of CCs (e.g., a plurality of CCs for applying the same analog beam in the same frequency band) in spatial QCL.

Embodiments according to the present disclosure will be described below in detail with reference to drawings. Respective radio communication methods according to the Embodiments may be applied alone, or may be applied in combination.

In addition, in the present disclosure, a panel, Uplink (UL) transmission entity, TRP, demodulation reference signal (DeModulation Reference Signal (DMRS)) port, DMRS port group, Code Division Multiplexing (CDM) group, group related to given reference signals, control resource set (COntrol Resource SET (CORESET)) group, CORESET, PDSCH, codeword, base station and the like may be read with one another. Further, a panel Identifier (ID) and a panel may be read with each other. A TRP ID and the TRP may be read with each other.

In addition, the following description will illustrate an example for making a plurality of CCs one group, and controlling the TCI state on a group-by-group basis, but the invention is not limited thereto. In other words, the "CC" of the present disclosure may be read with "at least one of the CC, BWP, CORESET and panel", or may be read with "an index of at least one of the CC, BWP, CORESET and panel". The index and ID may be read with each other. The "CC" in the present disclosure may mean a cell, or may mean a serving cell.

Further, the "group" in the present disclosure may be read with grouping, sequence, list, set and the like.

Hereinafter, the RS of QCL-Type-X of the TCI state may mean an RS in a QCL-Type-X relationship with certain channel/signal (of DMRS), and the RS may be called a QCL source of QCL-Type-X of the TCI state.

### (Radio communication method)

### <Embodiment 1>

Embodiment 1 relates to UE operation in the case where a TCI state for a CC belonging to certain group is updated in the case of using grouping of CCs related to the TCI state. In addition, configuration of grouping and the like will be described later in Embodiment 2.

In the case where the TCI state for the CC belonging to certain group is updated, the UE may assume that TCI states of all CCs belonging to the group are also updated.

For example, in the case where the TCI state for a first CC belonging to certain group is updated, the UE may assume that the TCI state for a second CC belonging to the group is updated to a TCI state for the second CC having a given QCL relationship (e.g., QCL-Type-D) with an RS of the updated TCI state for the first CC.

In addition, the update of the TCI state may mean that an active TCI state is changed by MAC CE (a new TCI state is activated or indicated), or may mean that an active TCI state is changed by DCI (a new TCI state is indicated). In addition, the DCI may correspond to DCI for scheduling a PDSCH for a UE on which TCI-Present information is set as "enabled".

FIG. 1 is a diagram showing one example of grouping of CCs related to the TCI state. This example shows a band 1 including CCs #m and #n, and a band 2 including CCs #p and #q. Further, it is assumed that the CCs #m and #n belong to the same group (e.g., first group) . It is assumed that the CCs #p and #q belong to a group (e.g., second group) different from the first group.

In addition, this example shows the example where a plurality of CCs in the band belongs to the same group, but the application scope of the present invention is not limited thereto. For example, a plurality of CCs belonging to the same group may be CCs included in respective different bands.

Further, FIG. 1 shows indexes of TRSs configured for TCI states for each CC. For example, the TRS corresponding to an index i of CC #x may be described as TRS #x_i. FIG. 1 shows respective TRSs that correspond to 4 TCI states in each CC. In addition, the TRS of the present disclosure may be mutually read with a reference signal such as CSI-RS and SSB.

In this example, it is assumed that TRSs of the same index are transmitted in the same time resource (timing), but the invention is not limited to thereto . For example, TRS #m_i and TRS "n_i may be transmitted in mutually different time resources.

In this example, the UE assumes that TRSs of the same index are in a given QCL-Type relationship. For example, the UE assumes that TRS #m_i and TRS "#n_i are in a QCL-Type-D relationship. The QCL relationship among a plurality of TRSs may be beforehand determined by specifications, or may be configured for a UE by higher layer signaling.

In addition, the RS of QCL-Type-A of the TCI state is preferably transmitted in a TCI state-configured cell. This is because it is considered that a parameter (Doppler shift, etc.) of QCL-Type-A varies with cells. On the other hand, the RS of QCL-Type-D of the TCI state may be transmitted in a TCI state-configured cell, or may be transmitted in a serving cell except the TCI state-configured cell.

In addition, the case is considered where TRSs of the same CC are configured as the RS of QCL-Type-D in the TCI state for certain cell. For example, the case is considered where the TCI state for CC #m is {TRS #m_1 (RS of QCL-Type-A), TRS #m_1 (RS of QCL-Type-D)}, and the TCI state for CC #n is {TRS #n_1 (RS of QCL-Type-A), TRS #n_1 (RS of QCL-Type-D)}.

In addition, in this example, the RS of Type-A and the RS of Type-D in certain TCI state are assumed to be the same RSs, but may be different RSs.

Herein, in the case where the TCI state for CC #m is updated to {TRS #m_4 (RS of QCL-Type-A), TRS #m_4 (RS of QCL-Type-D) }, based on that the TRS #m_4 and TRS #n_4 are QCL-Type-D, the UE may assume that TCI states for the other CC (CC #n) belonging to the same group are implicitly updated to {TRS #n_4 (RS of QCL-Type-A), TRS #n_4 (RS of QCL-Type-D)}.

In addition, in the present disclosure, "assuming" may be read with "considering".

As another example of FIG. 1, the case is considered where TRSs of another CC are configured as the RS of QCL-Type-D in the TCI state for certain CC. For example, the case is considered where the TCI state for CC #m is {TRS #m_1 (RS of QCL-Type-A), TRS #m_1 (RS of QCL-Type-D) }, and the TCI state for CC #n is {TRS #n_1 (RS of QCL-Type-A), TRS #m_1 (RS of QCL-Type-D) }. In other words, TRS #m_1 of another CC #m is configured as the RS of QCL-Type-D of the TCI state for the CC #n.

Herein, in the case where the TCI state for CC #m is updated to {TRS #m_4 (RS of QCL-Type-A), TRS #m_4 (RS of QCL-Type-D) }, based on that the TRS #m_4 and TRS #n_4 are QCL-Type-D, the UE may assume that TCI states for the other CC (CC #n) belonging to the same group are implicitly updated to {TRS #n_4 (RS of QCL-Type-A), TRS #m_4 (RS of QCL-Type-D)}.

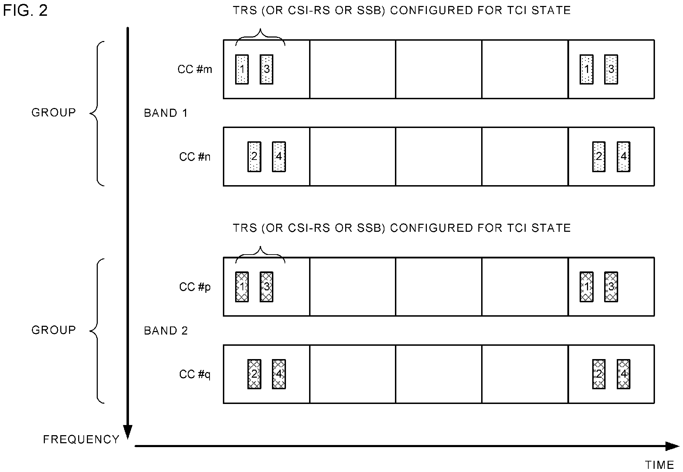

In addition, the TCI state configured in certain CC may not include the same index as the TCI state configured in another CC. FIG. 2 is a diagram showing another example of grouping of CCs related to the TCI state. This example is almost the same as in FIG. 1, and is different in the respect that two TRSs correspond to the TCI state configured in each CC.

In the case of the absence of a corresponding TRS index, the UE may assume that the RS of QCL-Type-A is absent, or may assume that the TRS index is not used in processing of channel estimation and the like.

For example, in the case where the TCI state for CC #m is {TRS #m_1 (RS of QCL-Type-A), TRS #m_1 (RS of QCL-Type-D)}, the UE may assume that the TCI state for CC #n is {TRS #m_1 (RS of QCL-Type-D)}.

In addition, also in the case where the corresponding TRS index is present, the UE may assume that the RS of a given QCL-Type (e.g., A or D) is absent. The UE may be configured for the TCI state that does not include the RS of the given QCL-Type.

According to Embodiment 1 as described above, only by updating the TCI state for one CC, the same effect is exerted as the case of updating also the TCI state for another CC of the same group, it is possible to effectively suppress communication overhead required for an update of the TCI state.

### <Modification of Embodiment 1>

In addition, in Embodiment 1, the UE may assume that a cell (which may be called an update-targeted cell) that an update of the TCI state is notified by MAC CE or DCI is an arbitrary cell, or may assume that the cell is limited to a particular cell. In the latter case, it is possible to suppress increases in UE load required for monitoring the update of the TCI state.

The particular cell may be a Special Cell (SpCell) (e.g., Primary Cell (PCell) or Primary Secondary Cell (PSCell)), or may be a Secondary Cell (SCell). The particular cell may be beforehand defined by specifications, or may be configured on the UE by higher layer signaling.

Further, in the case where the TRS of a first CC is configured, activated or indicated as a QCL source of a given QCL-Type (e.g., QCL-D) in the TCI state for a channel/signal (e.g., PDCCH, PDSCH, CSI-RS, etc.) of a second CC, the UE may assume that the cell that the update of the TCI state is notified by MAC CE or DCI is limited to a cell that corresponds to the first CC.

### <Embodiment 2>

Embodiment 2 relates to configuration of grouping of CCs related to the TCI state.

In the UE, a group of CCs related to the TCI state may be configured (designated) using higher layer signaling (e.g., RRC signaling, MAC CE, etc.).

For example, the UE may be configured for a correspondence relationship between the TCI state and the group ID using the higher layer signaling. The RRC information element ("TCI-State") of TCI state information also specified in Rel-15 NR or the RRC information element (e.g., which may be called "TCI-State_rl6", etc.) of TCI state information in Rel-16 onward may include a parameter of a group ID related to the TCI state. Further, as a substitute for the TCI state information, another RRC information element may include a parameter indicative of association of the TCI state ID with the group ID.

Based on the higher layer signaling as described above, the UE may identify a group that corresponds to each TCI state. Based on the identified group, for example, the UE may implement control related to the TCI state as described in Embodiment 1.

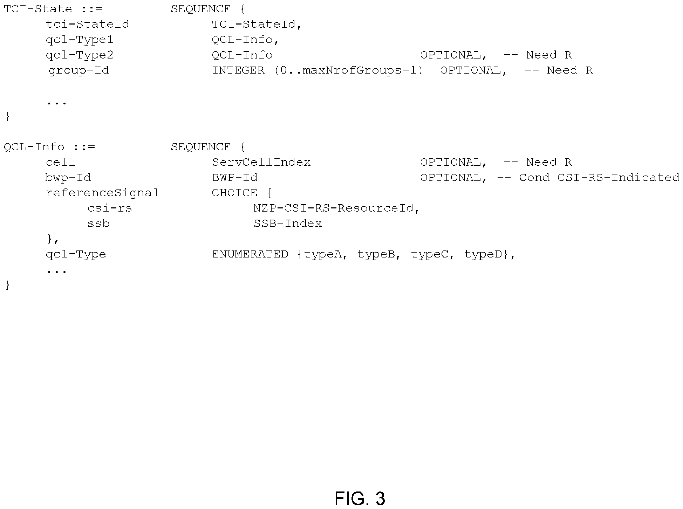

FIG. 3 is a diagram showing one example of RRC information elements related to the TCI state. FIG. 3 is described using the Abstract Syntax Notation One (ASN. 1) description method. This example shows an example where the RRC information element ("TCI-State") of TCI state information also specified in Rel-15 NR newly includes a parameter of a group ID related to the TCI state.

As shown in FIG. 3, the TCI state information ("TCI-State") may include a TCI state ID ("TCI-State Id") and one or more pieces of QCL information ("QCL-Info"). The QCL information may include at least one of information (RS relation information ("reference Signal")) on an RS with the QCL relationship, and information (QCL type information "qcl-Type") indicative of a QCL type. The RS relation information may include an index (e.g., NZP CSI-RS resource ID, SSB index) of the RS, an index of the serving cell, an index of a BWP in which the RS is positioned, and the like.

The TCI state information of FIG. 3 may include a parameter ("Group-Id") of a group ID. For example, the group ID may be a value of the maximum number of groups more than "0" - 1 ("maxNrofGroups-1"). Such TCI state information including the group ID may be called grouped TCI state information (or grouped TCI states).

In the case where a UE is not configured for a group of CCs related to the TCI state or the above-mentioned correspondence relationship, the UE may assume at least one of the following items:
all CCs are implicitly grouped (all CCs belong to the same group;
all CCs within a given frequency region (e.g., given frequency band, frequency range, frequency band) are implicitly grouped;
all CCs belonging to the same cell group are implicitly grouped;
CCs with the same configured, activated or indicated TCI state are implicitly grouped; and
CCs with configured, activated or indicated TCI states being in a relationship of QCL-D are implicitly grouped.

In addition, in the case where the information for enabling grouping of CCs related to the TCI state is configured by higher layer signaling, the UE may apply the grouping. In the case where indexes or TCI state information of grouped CCs is configured by the higher layer signaling (e.g., RRC signaling, MAC CE), the UE may apply the grouping.

Based on one MAC CE, the UE may collectively indicate TCI states related to certain group, or may collectively activate TCI states related to certain group.

For example, at least one of TCI States Activation/Deactivation for UE-specific PDSCH MAC CE and TCI State Indication for UE-specific PDCCH MAC CE may include a group ID field to indicate a group for applying the MAC CE.

When a UE receives the TCI States Activation/Deactivation for UE-specific PDSCH MAC CE including a group ID field, with respect to the PDSCH of each CC belonging to the group indicated by the group ID field, the UE may assume that the TCI state activated by the MAC CE is indicated by DCI.

When a UE receives the TCI State Indication for UE-specific PDCCH MAC CE including a group ID field, with respect to the PDCCH (CORESET) of each CC belonging to the group indicated by the group ID field, the UE may assume the TCI state indicated by the MAC CE.

In addition, the UE may assume that the group ID is not configured (is not capable of being grouped), with respect to at least one of a particular CC, particular BWP and particular CORESET. For example, the UE may assume that grouping of TCI states is not applied to CORESET #0, initial BWP and the like. In this case, with respect to a part of CCs and so on, the UE is capable of assuming that an applicable TCI state is not changed as long as the TCI state is explicitly designated/activated, and is thereby capable of flexibly controlling UE processing.

In addition, the above-mentioned MAC CE including the group ID field may include a serving cell ID field, BWP ID field, CORESET ID field and the like, as the existing MAC CE, or may not include at least one of the fields. The MAC CE may be configured to include the group ID field, as a substitute for the field that is not included. The above-mentioned MAC CE including the group ID field may be associated with another Logical Channel ID (LCID) different from the existing LCID.

The UE, which is configured for only the TCI state that is not related to the group ID (i.e., configured for only "TCI-State" that does not include "Group-Id"), may assume that the TCI state is designated/activated using the MAC CE that does not include the group ID field.

The UE configured for the TCI state related to the group ID (e.g., configured for "TCI-State" including "Group-Id") may assume that the TCI state is designated/activatedusing the MAC CE including the group ID field.

In addition, as described in the Modification of Embodiment 1, the cell that the update of the TCI state is notified may be limited to a particular cell. For example, the UE may assume that the MAC CE including the group ID field is transmitted only in the above-mentioned particular cell (SpCell, etc.).

According to Embodiment 2 as described above, the UE is capable of properly judging grouping related to the TCI state.

### <Embodiment 3>

The descriptions of the above-mentioned Embodiments 1 and 2 are related to the TCI state (which may be called DL TCI state) applied to a downlink channel/signal such as the PDCCH, PDSCH and the like, and the descriptions of these Embodiments may be read with at least one of the spatial relation (SRI), UL TCI state (the UL TCI state will be described later) and the like applied to an uplink channel/signal such as the PUCCH, PUSCH and SRS.

For example, in the UE, a group of CCs related to at least one of the SRI and UL TCI state may be configured (designated) using higher layer signaling (e.g., RRC signaling, MAC CE, etc.).

For example, when a UE receives PUCCH Spatial Relation Activation/Deactivation MAC CE including a group ID field, with respect to the PUCCH of each CC belonging to a group indicated by the group ID field, the UE may assume the spatial relation activated by the MAC CE.

In addition, in a similar manner to notification of the DL beam (DL TCI state) of the UE, the UL TCI state may correspond to notification of the UL beam. By control based on the UL TCI state, the UE is expected to suitably perform simultaneous UL transmission using a plurality of panels.

With respect to UL transmission, when a related panel ID is designated (e.g., designated by DCI), the UE may perform the UL transmission using a panel corresponding to the panel ID. The panel ID may be associated with the UL TCI state, and in the case where the UL TCI state is designated (or activated) with respect to a given UL channel/signal, the UE may identify a panel used in the UL channel/signal transmission according to the panel ID related to the UL TCI state.

For example, the channel/signal (which may be called a target RS) that the UL TCI state is configured (designated) may be at least one of the PUSCH (DMRS of the PUSCH), PUCCH (DMRS of the PUCCH), random access channel (Physical Random Access Channel (PRACH)), SRS and the like.

Further, for example, an RS (source RS) in a QCL relationship with the channel/signal maybe a DL RS (e.g., SSB, CSI-RS, TRS, etc.), or may be a UL RS (e.g., SRS, SRS for beam management, etc.).

In the UL TCI state, an RS in the QCL relationship with the channel/signal may be associated with a panel ID to receive or transmit the RS. The association may be configured (or designated) explicitly by the higher layer signaling (e.g., RRC signaling, MAC CE, etc.) or may be judged implicitly.

The correspondence relationship between the RS and the panel ID may be configured by being included in the UL TCI state information, or may be configured by being included in at least one of resource configuration information on the RS, spatial relation information and the like.

The QCL-Type indicated by the UL TCI state may be the existing QCL-Types A to D, or may be another QCL-Type, and may include a given spatial relation, related-antenna port (port index) and the like.

According to Embodiment 3 as described above, only by updating the spatial relation/UL TCI state for one CC, since the same effect is exerted as the case of updating also the spatial relation/UL TCI state for another CC of the same group, it is possible to effectively suppress communication overhead required for an update of the TCI state.

### <Others>

The UE may report the UE capability information including information on at least one of the following matters to the network:
- whether or not to support the TCI state (or TCI state signaling) for groups of CCs;
- the maximum number of CCs for the groups (grouping) to support;
- the maximum number of BWPs for the groups (grouping) to support;
- the maximum number of the groups to support;
- the number of RS resources configured in all TCI states for each of the groups; and
- the number of RS resources configured in all TCI states for all of the groups.

The network may notify the UE which reports to support the above-mentioned UE capability of information for enabling grouping of CCs related to TCI states, and the like.

### (Radio communication system)

A configuration of a radio communication system according to one Embodiment of the present disclosure will be described below. In the radio communication system, communication is performed by using one of radio communication methods according to the respective above-mentioned Embodiments of the disclosure or combination thereof.

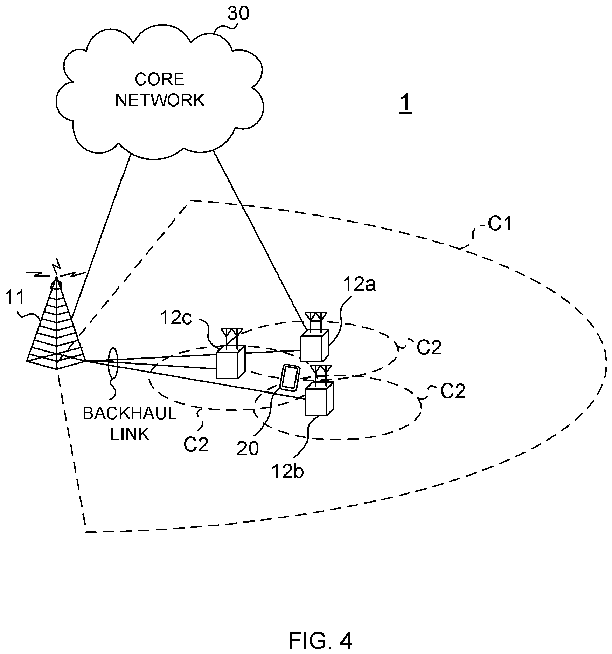

FIG. 4 is a diagram showing one example of a schematic configuration of the radio communication system according to one Embodiment. The radio communication system 1 may be a system for actualizing communication using Long Term Evolution (LTE), 5th generation mobile communication system New Radio (5G NR) and the like specified by Third Generation Partnership Project (3GPP).

Further, the radio communication system 1 may support dual connectivity (Multi-RAT Dual Connectivity (MR-DC)) among a plurality of Radio Access Technologies (RAT). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and the like.

In EN-DC, a base station (eNB) of LTE (E-UTRA) is a master node (Master Node (MN)), and a base station (gNB) of NR is a secondary node (SecondaryNode (SN)). InNE-DC, a base station (gNB) of NR is an MN, and a base station (gNB) of LTE (E-UTRA) is an SN.

The radio communication system 1 may support dual connectivity (e.g., dual connectivity (NR-NR Dual Connectivity (NN-DC) where both of the MN and SN are the base stations (gNB) of NR) among a plurality of base stations in the same RAT.

The radio communication system 1 may be provided with a base station 11 for forming a macrocell C1 with relatively wide coverage, and base stations 12 (12a to 12c) disposed inside the macrocell C1 to form small cells C2 narrower than the macrocell C1. A user terminal 20 may bepositioned in at least one cell. The arrangement, numbers and the like of each cell and user terminal 20 are not limited to the aspect shown in the figure. Hereinafter, in the case of not distinguishing between the base stations 11 and 12, the stations are collectively called a base station 10.

The user terminal 20 may connect to at least one of a plurality of base stations 10. The user terminal 20 may use at least one of carrier aggregation (Carrier Aggregation (CA)) using a plurality of component carriers (Component Carrier (CC)) and dual connectivity (DC).

Each CC may be included in at least one of a first frequency band (Frequency Range 1 (FR1)) and second frequency band (Frequency Range 2 (FR2)). The macrocell C1 may be included in the FR1, and the small cell C2 may be included in the FR2. For example, the FR1 may be a frequency band (sub-6 GHz) of 6 GHz or less, and the FR2 may be a high frequency band (above-24 GHz) higher than 24 GHz. In addition, the frequency bands, definitions and the like of the FR1 and FR2 are not limited thereto, and for example, the FR1 may correspond to a frequency band higher than the FR2.

Further, in each CC, the user terminal 20 may perform communication using at least one of Time Division Duplex (TDD) and Frequency Division Duplex (FDD).

A plurality of base stations 10 may be connected by cables (e.g., optical fiber in conformity with Common Public Radio Interface (CPRI), X2 interface, etc.), or by radio (e.g., NR communication) . For example, in the case of using NR communication as backhaul between the base stations 11 and 12, the base station 11 corresponding to a higher station may be called an Integrated Access Backhaul (IAB) donor, and the base station 12 corresponding to a relay station (relay) may be called an IAB node.

The base station 10 may be connected to a core network 30 via another base station 10 or directly. For example, the core network 30 may include at least one of Evolved Packet Core (EPC), 5G CoreNetwork (5GCN), Next Generation Core (NGC) and the like.

The user terminal 20 may be a terminal supporting at least one of communication schemes such as LTE, LTE-A, and 5G.

In the radio communication system 1, an Orthogonal Frequency Division Multiplexing (OFDM)-based radio access scheme may be used. For example, on at least one of downlink (Downlink (DL)) and uplink (Uplink (UL)) may be used Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA) and the like.

The radio access scheme may be called a waveform. In addition, in the radio communication system 1, another radio access scheme (e.g., another single carrier transmission scheme, another multi-carrier transmission scheme) may be used for the radio access scheme of UL and DL.

As downlink channels, in the radio communication system 1 may be used a downlink shared channel (Physical Downlink Shared Channel (PDSCH)) shared by user terminals 20, broadcast channel (Physical Broadcast Channel (PBCH)), downlink control channel (Physical Downlink Control Channel (PDCCH)) and the like.

Further, as uplink channels, in the radio communication system 1 maybe used an uplink shared channel (Physical Uplink Shared Channel (PUSCH)) shared by user terminals 20, uplink control channel (Physical Uplink Control Channel (PUCCH)), random access channel (Physical Random Access Channel (PRACH)) and the like.

User data, higher layer control information, System Information Block (SIB) and the like are transmitted on the PDSCH. The user data, higher layer control information and the like may be transmitted on the PUSCH. Further, Master Information Block (MIB) may be transmitted on the PBCH.

Lower layer control information may be transmitted on the PDCCH. For example, the lower layer control information may include downlink control information (Downlink Control Information (DCI)) including scheduling information of at least one of the PDSCH and

### PUSCH.

In addition, DCI for scheduling the PDSCH may be called a DL assignment, DL DCI and the like, and DCI for scheduling the PUSCH may be called a UL grant, UL DCI and the like. In addition, the PDSCH may be read with DL data, and the PUSCH may be read with UL data.

For detection of the PDCCH, a control resource set (COntorl REsource SET (CORESET)) and search space may be used. The CORESET corresponds to resources to search for the DCI. The search space corresponds to a search region and search method of PDCCH candidates. One CORESET may be associated with one or a plurality of search spaces. The UE may monitor the CORESET related to certain search space based on search space configuration.

One search space may correspond to PDCCH candidates corresponding to one or a plurality of aggregation levels . One or a plurality of search spaces may be called a search space set. In addition, the "search space", "search space set", "search space configuration", "search space set configuration", "CORESET", "CORESET configuration" and the like of the present disclosure may be read with one another.

On the PUCCH may be transmitted uplink control information (Uplink Control Information (UCI)) including at least one of Channel State Information (CSI), receipt confirmation information (for example, which may be called Hybrid Automatic Repeat reQuest ACKnowledgement (HARQ-ACK), ACK/NACK and the like) and Scheduling Request (SR). A random access preamble to establish connection with the cell may be transmitted on the PRACH.

In addition, in the present disclosure, the downlink, uplink and the like may be expressed without attaching "link". Further, various channels may be expressed without attaching "Physical" at the beginning.

In the radio communication system 1 may be transmitted a Synchronization Signal (SS), Downlink Reference Signal (DL-RS) and the like. As the DL-RS, in the radio communication system 1 may be transmitted a Cell-specific Reference Signal (CRS), Channel State Information Reference Signal (CSI-RS), demodulation reference signal (DeModulation Reference Signal (DMRS)), Positioning Reference signal (PRS), Phase Tracking Reference Signal (PTRS) and the like.

For example, the synchronization signal may be at least one of a Primary Synchronization Signal (PSS) and Secondary Synchronization Signal (SSS). A signal block including the SS (PSS, SSS) and PBCH (and DMRS for the PBCH) may be called an SS/PBCH block, SS Block (SSB) and the like. In addition, the SS, SSB and the like may also be called the reference signal.

Further, in the radio communication system 1, a Sounding Reference Signal (SRS), demodulation reference signal (DMRS) and the like may be transmitted as an Uplink Reference Signal (UL-RS). In addition, the DMRS may be called a user terminal-specific reference signal (UE-specific Reference Signal).

### (Base station)

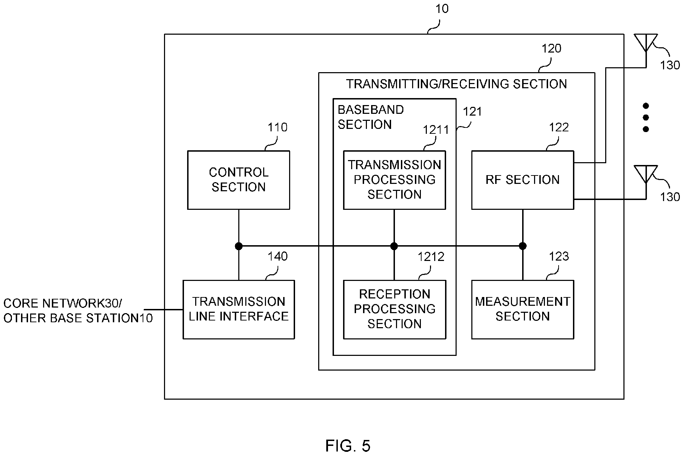

FIG. 5 is a diagram showing one example of a configuration of the base station according to one Embodiment. The base station 10 is provided with a control section 110, transmitting/receiving section 120, transmitting/receiving antennas 130, and transmission line interface 140. In addition, the base station may be provided with one or more of each of the control section 110, transmitting/receiving section 120, transmitting/receiving antenna 130, and transmission line interface 140.

In addition, this example mainly illustrates function blocks of feature parts in this Embodiment, and the base station 10 may be assumed to have other function blocks required for radio communication. A part of processing of each section described below may be omitted.

The control section 110 performs control of the entire base station 10. The control section 110 is capable of being comprised of a controller, control circuit and the like explained based on common recognition in the technical field according to the present disclosure.

The control section 110 may control generation of signals, scheduling (e.g., resource allocation, mapping) and the like. The control section 110 may control transmission/reception, measurement and the like using the transmitting/receiving section 120, transmitting/receiving antenna 130 and transmission line interface 140. The control section 110 may generate data, control information, sequence and the like to transmit as a signal, and transfer the resultant to the transmitting/receiving section 120. The control section 110 may perform call processing (configuration, release, etc.) of a communication channel, state management of the base station 10, management of radio resources and the like.

The transmitting/receiving section 120 may include a baseband section 121, Radio Frequency (RF) section 122 and measurement section 123. The baseband section 121 may include a transmission processing section 1211 and reception processing section 1212. The transmitting/receiving section 120 is capable of being comprised of a transmitter/receiver, RF circuit, baseband circuit, filter, phase shifter, measurement circuit, transmitting/receiving circuit and the like explained based on the common recognition in the technical field according to the present disclosure.

The transmitting/receiving section 120 may be comprised as an integrated transmitting/receiving section, or may be comprised of a transmitting section and a receiving section. The transmitting section may be comprised of a transmission processing section 1211 and RF section 122. The receiving section may be comprised of a reception processing section 1212, RF section 122, and measurement section 123.

The transmitting/receiving antenna 130 is capable of being comprised of an antenna, for example, an array antenna and the like explained based on the common recognition in the technical field according to the present disclosure.

The transmitting/receiving section 120 may transmit the above-mentioned downlink channel, synchronization signal, downlink reference signal and the like. The transmitting/receiving section 120 may receive the above-mentioned uplink channel, uplink reference signal and the like.

The transmitting/receiving section 120 may form at least one of a transmission beam and reception beam, using digital beam forming (e.g., precoding), analog beam forming (e.g., phase rotation) and the like.

The transmitting/receiving section 120 (transmission processing section 1211) may perform, for example, on the data, control information and the like acquired from the control section 110, processing of Packet Data Convergence Protocol (PDCP) layer, processing (e.g., RLC retransmission control) of Radio Link Control (RLC) layer, processing (e.g., HARQ retransmission control) of Medium Access Control (MAC) layer and the like to generate a bit sequence to transmit.

The transmitting/receiving section 120 (transmission processing section 1211) may perform, on the bit sequence to transmit, transmission processing such as channel coding (which may include error correcting coding), modulation, mapping, filter processing, Discrete Fourier Transform (DFT) processing (as necessary), Inverse Fast Fourier Transform (IFFT) processing, precoding and digital-analog conversion, and output a baseband signal.

The transmitting/receiving section 120 (FR section 122) may perform modulation to a radio frequency band, filter processing, amplification and the like on the baseband signal to transmit a signal of the radio frequency band via the transmitting/receiving antenna 130.

On the other hand, the transmitting/receiving section 120 (RF section 122) may perform amplification, filter processing, demodulation to a baseband signal and the like on a signal of the radio frequency band received by the transmitting/receiving antenna 130.

The transmitting/receiving section 120 (reception processing section 1212) may apply reception processing such as analog-digital conversion, Fast Fourier Transform (FTT) processing, Inverse Discrete Fourier Transform (IDFT) processing (as necessary), filter processing, demapping, demodulation, decoding (which may include error correcting decoding), MAC layer processing, processing of RCL layer, and processing of PDCP layer to the acquired baseband signal, and acquire the user data, and the like.

The transmitting/receiving section 120 (measurement section 123) may perform measurement on a received signal. For example, based on the received signal, the measurement section 123 may perform Radio Resource Management (RRM) measurement, Channel State Information (CSI) measurement and the like. The measurement section 123 may measure received power (e.g., Reference Signal Received Power (RSRP)), received quality (e.g., Reference Signal Received Quality (RSRQ), Signal to Interference plus Noise Ratio (SINR), Signal to Noise Ratio (SNR)), signal strength (e.g., Received Signal Strength Indicator (RSSI)), propagation path information (e.g., CSI) and the like. The measurement result may be output to the control section 110.

The transmission line interface 140 may transmit/receive signals (backhaul signaling) to/from an apparatus included in the core network 30, another base station 10 and the like to perform acquisition, transmission and the like of user data (user plain data), control plain data and the like for the user terminal 20.

In addition, the transmitting section and receiving section of the base station 10 in the present disclosure may be comprised of at least one of the transmitting/receiving section 120, transmitting/receiving antenna 130 and transmission line interface 140.

In addition, the transmitting/receiving section 120 may transmit, to the user terminal 20, information (e.g., RRC information element, MAC CE, DCI, etc.) on groups that correspond to at least one (which may be described as TCI state/spatial relation) of Transmission Configuration Indication state (TCI state) and spatial relation.

In the case where the TCI state/spatial relation for a given cell (may be read with a CC) or Bandwidth Part (BWP) belonging to certain group is updated with respect to a given user terminal 20, the control section 110 may assume that the TCI state/spatial relation for all cells or BWPs belonging to the group are also updated.

### (User terminal)

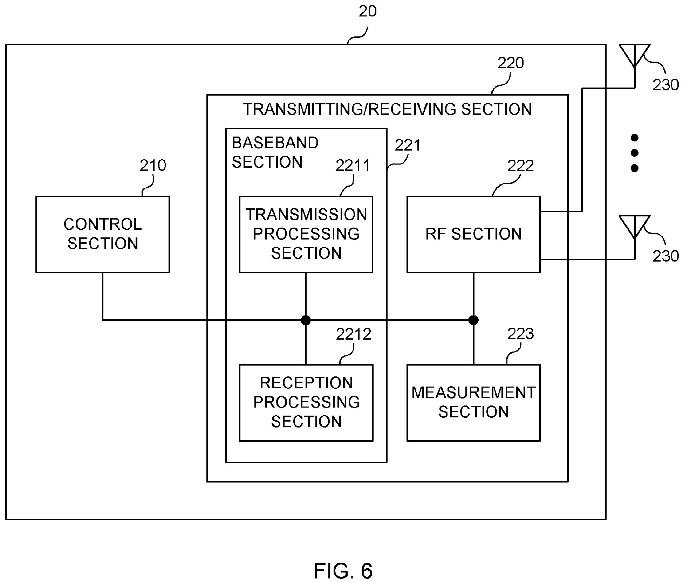

FIG. 6 is a diagram showing one example of a configuration of the user terminal according to one Embodiment. The user terminal 20 is provided with a control section 210, transmitting/receiving section 220, and transmitting/receiving antennas 230. In addition, the user terminal may be provided with one or more of each of the control section 210, transmitting/receiving section 220 and transmitting/receiving antenna 230.

In addition, this example mainly illustrates function blocks of feature parts in this Embodiment, and the user terminal 20 may be assumed to have other function blocks required for radio communication. A part of processing of each section described below may be omitted.

The control section 210 performs control of the entire user terminal 20. The control section 210 is capable of being comprised of a controller, control circuit and the like explained based on the common recognition in the technical field according to the present disclosure.

The control section 210 may control generation of signals, mapping and the like. The control section 210 may control transmission/reception, measurement and the like using the transmitting/receiving section 220 and transmitting/receiving antenna 230. The control section 210 may generate data, control information, sequence and the like to transmit as a signal, and transfer the resultant to the transmitting/receiving section 220.

The transmitting/receiving section 220 may include a baseband section 221, RF section 222 and measurement section 223. The baseband section 221 may include a transmission processing section 2211 and reception processing section 2212. The transmitting/receiving section 220 is capable of being comprised of a transmitter/receiver, RF circuit, baseband circuit, filter, phase shifter, measurement circuit, transmitting/receiving circuit and the like explained based on the common recognition in the technical field according to the present disclosure.

The transmitting/receiving section 220 may be comprised as an integrated transmitting/receiving section, or may be comprised of a transmitting section and a receiving section. The transmitting section may be comprised of a transmission processing section 2211 and RF section 222. The receiving section may be comprised of a reception processing section 2212, RF section 222, and measurement section 223.

The transmitting/receiving antenna 230 is capable of being comprised of an antenna, for example, an array antenna and the like explained based on the common recognition in the technical field according to the present disclosure.

The transmitting/receiving section 220 may receive the above-mentioned downlink channel, synchronization signal, downlink reference signal and the like. The transmitting/receiving section 220 may transmit the above-mentioned uplink channel, uplink reference signal and the like.

The transmitting/receiving section 220 may form at least one of a transmission beam and reception beam, using digital beam forming (e.g., precoding), analog beam forming (e.g., phase rotation) and the like.

The transmitting/receiving section 220 (transmission processing section 2211) may perform, for example, on the data, control information and the like acquired from the control section 210, processing of PDCP layer, processing (e.g., RLC retransmission control) of RLC layer, processing (e.g., HARQ retransmission control) of MAC layer and the like to generate a bit sequence to transmit.

The transmitting/receiving section 220 (transmission processing section 2211) may perform, on the bit sequence to transmit, transmission processing such as channel coding (which may include error correcting coding), modulation, mapping, filter processing, DFT processing (as necessary), IFFT processing, precoding and digital-analog conversion, and output a baseband signal.

In addition, whether or not to apply the DFT processing may be based on configuration of transform precoding. In the case where transform precoding is enabled on certain channel (e.g., PUSCH), the transmitting/receiving section 220 (transmission processing section 2211) may perform the DFT processing as the above-mentioned transmission processing so as to transmit the channel using a DFT-s-OFDM waveform. In the other case, the section may not perform the DFT processing as the above-mentioned transmission processing.

The transmitting/receiving section 220 (FR section 222) may perform modulation to a radio frequency band, filter processing, amplification and the like on the baseband signal to transmit a signal of the radio frequency band via the transmitting/receiving antenna 230.

On the other hand, the transmitting/receiving section 220 (RF section 222) may perform amplification, filter processing, demodulation to a baseband signal and the like on a signal of the radio frequency band received by the transmitting/receiving antenna 230.

The transmitting/receiving section 220 (reception processing section 2212) may apply reception processing such as analog-digital conversion, FTT processing, IDFT processing (as necessary), filter processing, demapping, demodulation, decoding (which may include error correcting decoding), MAC layer processing, processing of RCL layer, and processing of PDCP layer to the acquired baseband signal, and acquire the user data, and the like.

The transmitting/receiving section 220 (measurement section 223) may perform measurement on a received signal. For example, based on the received signal, the measurement section 223 may perform RRM measurement, CSI measurement and the like. The measurement section 223 may measure received power (e.g., RSRP), received quality (e.g., RSRQ, SINR, SNR), signal strength (e.g., RSSI), propagation path information (e.g., CSI) and the like. The measurement result may be output to the control section 210.

In addition, the transmitting section and receiving section of the user terminal 20 in the present disclosure may be comprised of at least one of the transmitting/receiving section 220 and transmitting/receiving antenna 230.

In addition, the transmitting/receiving section 220 may receive the information (e.g., RRC information element, MAC CE, DCI, etc.) on groups that correspond to at least one (which may be described as TCI state/spatial relation) of Transmission Configuration Indication state (TCI state) and spatial relation.

In the case where the TCI state/spatial relation for a given cell (may be read with a CC) or Bandwidth Part (BWP) belonging to certain group is updated, the control section 210 may assume that the TCI state/spatial relation for all cells or BWPs belonging to the group are also updated. In addition, the "all cells or BWPs" may be read with "a plurality of cells or BWPs".

In the case where the TCI state/spatial relation for a first cell belonging to certain group is updated, the control section 210 may assume that the TCI state/spatial relation for a second cell belonging to the group is updated to a TCI state/spatial relation having a given Quasi-Co-Location (QCL) relationship with a reference signal of the updated TCI state/spatial relation for the first cell.

The control section 210 may assume that the cell, from which notification of the update of the TCI state/spatial relation is received, is limited to a particular cell (e.g., SpCell, etc.). For example, in the case where the reference signal of the first cell is configured, activated or indicated as a QCL source of a given QCL-Type of the TCI state/spatial relation for the second cell, the control section 210 may assume that the cell from which notification of the update of the TCI state/spatial relation is received is limited to the first cell.

### (Hardware configuration)

In addition, the block diagrams used in explanation of the above-mentioned Embodiments show blocks on a function-by-function basis. These function blocks (configuration sections) are actualized by any combination of at least one of hardware and software. Further, the method for actualizing each function block is not limited particularly. In other words, each function block may be actualized using a single apparatus combined physically or logically, or two or more apparatuses that are separated physically or logically are connected directly or indirectly (e.g., using cable, radio, etc.), and each function block may be actualized using a plurality of these apparatuses. The function block may be actualized by combining the above-mentioned one apparatus or the above-mentioned plurality of apparatuses and software.

Herein, the function includes judging, determining, deciding, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning and the like, but is not limited thereto. For example, the function block (configuration section) having the function of transmitting may be called a transmitting unit, transmitter and the like. In any case, as described above, the actualizing method is not limited particularly.

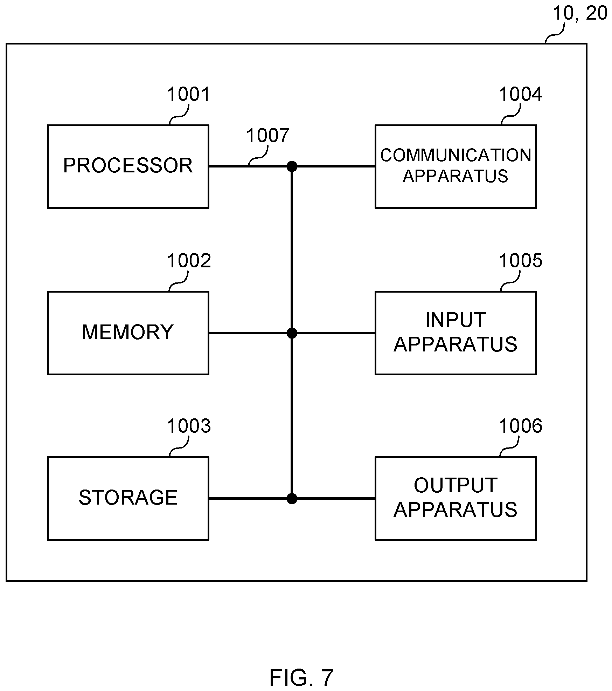

For example, each of the base station, user terminal and the like in one Embodiment of the present disclosure may function as a computer that performs the processing of the radio communication method of the disclosure. FIG. 7 is a diagram showing one example of a hardware configuration of each of the base station and user terminal according to one Embodiment. Each of the base station 10 and user terminal 20 as described above may be physically configured as a computer apparatus including a processor 1001, memory 1002, storage 1003, communication apparatus 1004, input apparatus 1005, output apparatus 1006, bus 1007 and the like.

In addition, in the present disclosure, it is possible to read the letter of apparatus, circuit, device, section, unit and the like with one another. With respect to each apparatus shown in the figure, the hardware configuration of each of the base station 10 and the user terminal 20 may be configured so as to include one or a plurality of apparatuses, or may be configured without including a part of apparatuses.

For example, a single processor 1001 is shown in the figure, but a plurality of processors may exist. Further, the processing may be executed by a single processor, or may be executed by two or more processors at the same time, sequentially or usinganothertechnique. Inaddition, the processor 1001 may be implemented on one or more chips.

For example, each function in the base station 10 and user terminal 20 is actualized in a manner such that given software (program) is read on the hardware of the processor 1001, memory 1002 and the like, and that the processor 1001 thereby performs computations, and controls communication via the communication apparatus 1004, and at least one of read and write of data in the memory 1002 and storage 1003.

For example, the processor 1001 operates an operating system to control the entire computer. The processor 1001 may be comprised of a Central Processing Unit (CPU) including interfaces with peripheral apparatuses, control apparatus, computation apparatus, register and the like. For example, at least a part of the above-mentioned control section 110 (210), transmitting/receiving section 120 (220) and the like may be actualized by the processor 1001.

Further, the processor 1001 reads the program (program code), software module, data and the like on the memory 1002 from at least one of the storage 1003 and the communication apparatus 1004, and according thereto, executes various kinds of processing. Used as the program is a program that causes the computer to execute at least a part of operation described in the above-mentioned Embodiments. For example, the control section 110 (210) may be actualized by a control program stored in the memory 1002 to operate in the processor 1001, and the other function blocks may be actualized similarly.

The memory 1002 is a computer-readable storage medium, and for example, may be comprised of at least one of Read Only Memory (ROM), Erasable Programmable ROM (EPROM), Electrically EPROM (EEPROM), Random Access Memory (RAM) and other proper storage media. The memory 1002 may be called the register, cache, main memory (main storage apparatus) and the like. The memory 1002 is capable of storing the program (program code), software module and the like executable to implement the radio communication method according to one Embodiment of the present disclosure.

The storage 1003 is a computer-readable storage medium, and for example, may be comprised of at least one of a flexible disk, floppy (Registered Trademark) disk, magneto-optical disk (e.g., compact disk (Compact Disc ROM (CD-ROM), etc.), digital multi-purpose disk, Blu-ray (Registered Trademark) disk), removable disk, hard disk drive, smart card, flash memory device (e.g., card, stick, key drive), magnetic stripe, database, server and other proper storage media. The storage 1003 may be called an auxiliary storage apparatus.

The communication apparatus 1004 is hardware (transmitting/receiving device) to perform communication between computers via at least one of a wired network and a wireless network, and for example, is also referred to as a network device, network controller, network card, communication module and the like. For example, in order to actualize at least one of Frequency Division Duplex (FDD) and Time Division Duplex (TDD), the communication apparatus 1004 may be comprised by including a high-frequency switch, duplexer, filter, frequency synthesizer and the like. For example, the transmitting/receiving section 120 (220), transmitting/receiving antenna 130 (230) and the like as described above may be actualized by the communication apparatus 1004. The transmitting/receiving section 120 (220) may be made by physically or logically separated implementation using a transmitting section 120a (220a) and receiving section 120b (220b).

The input apparatus 1005 is an input device (e.g., keyboard, mouse, microphone, switch, button, sensor, etc.) that receives input from the outside. The output apparatus 1006 is an output device (e.g., display, speaker, Light Emitting Diode (LED) lamp, etc.) that performs output to the outside. In addition, the input apparatus 1005 and output apparatus 1006 may be an integrated configuration (e.g., touch panel).

Further, each apparatus of the processor 1001, memory 1002 and the like is connected on the bus 1007 to communicate information. The bus 1007 may be configured using a single bus, or may be configured using different buses between respective apparatuses.

Furthermore, each of the base station 10 and user terminal 20 may be configured by including hardware such as a microprocessor, Digital Signal Processor (DSP), Application Specific Integrated Circuit (ASIC), Programmable Logic Device (PLD), and Field Programmable Gate Array (FPGA), or a part or the whole of each function block may be actualized using the hardware . For example, the processor 1001 may be implemented using at least one of the hardware.

### (Modification)

In addition, the term explained in the present disclosure and the term required to understand the present disclosure may be replaced with a term having the same or similar meaning. For example, the channel, symbol and signal (or signaling) may be read with one another. Further, the signal may be a message. The reference signal is capable of being abbreviated as RS, and according to the standard to apply, may be called a pilot, pilot signal and the like. Furthermore, the component carrier (CC) may be called a cell, frequency carrier, carrier frequency and the like.

A radio frame may be comprised of one or a plurality of frames in the time domain. The one or each of the plurality of frames constituting the radio frame may be called a subframe. Further, the subframe may be comprised of one or a plurality of slots in the time domain. The subframe may be a fixed time length (e.g., 1 ms) that is not dependent on numerology.

Herein, the numerology may be a communication parameter applied to at least one of transmission and reception of certain signal or channel. For example, the numerology may indicate at least one of SubCarrier Spacing (SCS), bandwidth, symbol length, cyclic prefix length, Transmission Time Interval (TTI), the number of symbols per TTI, radio frame configuration, particular filtering processing performed by a transmitter/receiver in the frequency domain, particular windowing processing performed by a transmitter/receiver in the time domain and the like.

The slot may be comprised of one or a plurality of symbols (Orthogonal Frequency Division Multiplexing (OFDM) symbols, Single Carrier Frequency Division Multiple Access (SC-FDMA) symbols and the like) in the time domain. Further, the slot may a time unit based on numerology.

The slot may include a plurality of mini-slots . Each mini-slot may be comprised of one or a plurality of symbols in the time domain. Further, the mini-slot may be called a subslot. The mini-slot may be comprised of the number of symbols lower than the slot. A PDSCH (or PUSCH) transmitted in a time unit larger than the mini-slot may be called PDSCH (PUSCH) mapping type A. A PDSCH (or PUSCH) transmitted using the mini-slot may be called PDSCH (PUSCH) mapping type B.

Each of the radio frame, subframe, slot, mini-slot and symbol represents a time unit in transmitting a signal. For the radio frame, subframe, slot, mini-slot and symbol, another name corresponding to each of them may be used. The time units such as the frame, subframe, slot, mini-slot and symbol in the present disclosure may be read with one another.

For example, one subframe may be called TTI, a plurality of contiguous subframes may be called TTI, or one slot or one mini-slot may be called TTI. In other words, at least one of the subframe and TTI may be the subframe (1 ms) in existing LTE, maybe a frame (e.g., 1 to 13 symbols) shorter than 1 ms, or may be a frame longer than 1 ms. In addition, instead of the subframe, the unit representing the TTI may be called the slot, mini-slot and the like.

Herein, for example, the TTI refers to a minimum time unit of scheduling in radio communication. For example, in the LTE system, the base station performs scheduling for allocating radio resources (frequency bandwidth, transmit power and the like capable of being used in each user terminal) to each user terminal in a TTI unit. In addition, the definition of the TTI is not limited thereto.

The TTI may be a transmission time unit of a data packet (transport block) subjected to channel coding, code block, codeword and the like, or may be a processing unit of scheduling, link adaptation and the like. In addition, when the TTI is given, a time segment (e.g., the number of symbols) to which the transport block, code block, codeword and the like are actually mapped may be shorter than the TTI.

In addition, when one slot or one mini-slot is called the TTI, one or more TTIs (i.e., one or more slots, or one or more mini-slots) may be the minimum time unit of scheduling. Further, the number of slots (the number of mini-slots) constituting the minimum time unit of scheduling may be controlled.

The TTI having a time length of 1 ms may be called ordinary TTI (TTI in 3GPP LTE Rel.8-12), normal TTI, long TTI, ordinary subframe, normal subframe, long subframe, slot and the like. The TTI shorter than the ordinary TTI may be called shortened TTI, short TTI, partial or fractional TTI, shortened subframe, short subframe, mini-slot, subslot, slot and the like.

In addition, the long TTI (e.g., ordinary TTI, subframe, etc.) may be read with TTI having a time length exceeding 1 ms, and the short TTI (e.g., shortened TTI, etc.) may be read with TTI having a TTI length of 1 ms or more and less than the TTI length of the long TTI.

The resource block (RB) is a resource allocation unit in the time domain and frequency domain, and may include one or a plurality of contiguous subcarriers in the frequency domain. The number of subcarriers contained in the RB may be the same irrespective of the numerology, and for example, may be "12". The number of subcarriers contained in the RB may be determined based on the numerology.

Further, the RB may include one or a plurality of symbols in the time domain, and may be a length of 1 slot, 1 mini-slot, 1 subcarrier, or 1 TTI. Each of 1 TTI, 1 sub frame and the like may be comprised of one or a plurality of resource blocks.

In addition, one or a plurality of RBs may be called a physical resource block (Physical RB (PRB)), subcarrier group (Sub-Carrier Group (SCG)), Resource Element Group (REG), PRB pair, RB pair and the like.

Further, the resource block may be comprised of one or a plurality of resource elements (Resource Element (RE)). For example, 1 RE may be a radio resource region of 1 subcarrier and 1 symbol.

A Bandwidth Part (BWP) (which may be called a partial bandwidth, etc.) may represent a subset of contiguous common RBs (common resource blocks) for certain numerology in certain carrier. Herein, the common RB may be identified by an index of the RB with a common reference point of the carrier as reference. The PRB may be defined by certain BWP, and may be numbered within the BWP.

The BWP may include UL BWP (BWP for UL) and DL BWP (BWP for DL). For a UE, one or a plurality of BWPs may be configured within one carrier.

At least one of configured BWPs may be active, and the UE may not assume that a given signal/channel is transmitted and received outside the active BWP. In addition, the "cell", "carrier" and the like in the present disclosure may be read with the "BWP".

In addition, structures of the above-mentioned radio frame, subframe, slot, mini-slot, symbol and the like are only illustrative. For example, it is possible to modify, in various manners, configurations of the number of subframes included in the radio frame, the number of slots per subframe or radio frame, the number of mini-slots included in the slot, the numbers of symbols and RBs included in the slot or mini-slot, the number of subcarriers included in the RB, the number of symbols within the TTI, the symbol length, the cyclic prefix (CP) length and the like.

Further, the information, parameter and the like explained in the present disclosure may be expressed using an absolute value, may be expressed using a relative value from a given value, or may be expressed using another corresponding information. For example, the radio resource may be indicated by a given index.

The names used in the parameter and the like in the present disclosure are not restrictive names in any respects. Further, equations and the like using these parameters may be different from those explicitly disclosed in the disclosure. It is possible to identify various channels (PUCCH, PDCCH, etc.) and information elements, by any suitable names, and therefore, various names assigned to these various channels and information elements are not restrictive names in any respects.

The information, signal and the like explained in the present disclosure may be represented by using any of various different techniques. For example, the data, order, command, information, signal, bit, symbol, chip and the like capable of being described over the entire above-mentioned explanation may be represented by voltage, current, electromagnetic wave, magnetic fieldormagnetic particle, optical field or photon, or any combination thereof.

Further, the information, signal and the like are capable of being output at least one of from a higher layer to a lower layer, and from the lower layer to the higher layer. The information, signal and the like may be input and output via a plurality of network nodes.

The input/output information, signal and the like may be stored in a particular place (e.g., memory), or may be managed using a management table. The input/output information, signal and the like are capable of being rewritten, updated or edited. The output information, signal and the like may be deleted. The input information, signal and the like may be transmitted to another apparatus.

Notification of the information is not limited to the Aspects/Embodiments described in the present disclosure, and may be performed using another method. For example, notification of the information in the disclosure may be performed using physical layer signaling (e.g., Downlink Control Information (DCI), Uplink Control Information (UCI)), higher layer signaling (e.g., Radio Resource Control (RRC) signaling, broadcast information (Master Information Block (MIB)), System Information Block (SIB) and the like), Medium Access Control (MAC) signaling), other signals, or combination thereof.

In addition, the physical layer signaling may be called Layer 1/Layer 2 (L1/L2) control information (L1/L2 control signal), L1 control information (L1 control signal) and the like. Further, the RRC signaling may be called RRC message, and for example, may be RRC connection setup (RRC Connection Setup) message, RRC connection reconfiguration (RRC Connection Reconfiguration) message, and the like. Furthermore, for example, the MAC signaling may be notified using MAC Control Element (MAC CE).

Further, notification of given information (e.g., notification of "being X") is not limited to explicit notification, and may be performed implicitly (e.g., notification of the given information is not performed, or by notification of different information).

The decision may be made with a value ("0" or "1") expressed by 1 bit, may be made with a Boolean value represented by true or false, or may be made by comparison with a numerical value (e.g., comparison with a given value).

Irrespective of that the software is called software, firmware, middle-ware, micro-code, hardware descriptive term, or another name, the software should be interpreted widely to mean a command, command set, code, code segment, program code, program, sub-program, software module, application, software application, software package, routine, sub-routine, object, executable file, execution thread, procedure, function and the like.

Further, the software, command, information and the like may be transmitted and received via a transmission medium. For example, when the software is transmitted from a website, server or another remote source using at least one of wired techniques (coaxial cable, optical fiber cable, twisted pair, Digital Subscriber Line (DSL) and the like) and wireless techniques (infrared, microwave and the like), at least one of the wired technique and the wireless technique is included in the definition of the transmission medium.

The terms of "system" and "network" used in the present disclosure are capable of being used interchangeably. A "network" may mean an apparatus (e.g., base station) included in the network.

In the present disclosure, the terms of "precoding", "precoder", "weight (precoding weight)", "Quasi-Co-Location (QCL)", "Transmission Configuration Indication state (TCI state)", "spatial relation", "spatial domain filter", "transmit power", "phase rotation", "antennaport", "antenna port group", "layer", "the number of layers", "rank", "resource", "resource set", "resource group", "beam", "beam width", "beam angle", "antenna", "antenna element", "panel" and the like are capable of being used interchangeably.

In the present disclosure, the terms of "Base Station (BS) ", "radio base station", "fixed station", "NodeB", "eNB (eNodeB)", "gNB (gNodeB)", "access point", "Transmission Point (TP)", "Reception Point (RP)", "Transmission/Reception Point (TRP)", "panel", "cell", "sector", "cell group", "carrier", "component carrier" and the like are capable of being used interchangeably. There is the case where the base station is called by the terms of macrocell, small cell, femto-cell, pico-cell and the like.

The base station is capable of accommodating one or a plurality of (e.g., three) cells. When the base station accommodates a plurality of cells, the entire coverage area of the base station is capable of being segmented into a plurality of smaller areas, and each of the smaller areas is also capable of providing communication services by a base station sub-system (e.g., small base station (Remote Radio Head (RRH)) for indoor use). The term of "cell" or "sector" refers to a part or the whole of coverage area of at least one of the base station and the base station sub-system that perform communication services in the coverage.

In the present disclosure, the terms of "Mobile Station (MS)", "user terminal", "User Equipment (UE)", "terminal" and the like are capable of being used interchangeably.

There is the case where the Mobile Station may be called using a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or certain other suitable terms.

At least one of the base station and the mobile station may be called a transmitting apparatus, receiving apparatus, radio communication apparatus and the like. In addition, at least one of the base station and the mobile station may be a device installed in a mobile unit, mobile unit itself and the like. The mobile unit may be a vehicle (e.g., car, airplane, etc.), may be a mobile unit (e.g., drone, self-driving car, etc.) without human intervention, or may be a robot (crewed type or uncrewed type). In addition, at least one of the base station and the mobile station includes an apparatus that does always not move at the time of communication operation. For example, at least one of the base station and the mobile station may be an Internet of Things (IoT) device such as a sensor.

Further, the base station in the present disclosure may be read with the user terminal. For example, each Aspect/Embodiment of the disclosure may be applied to a configuration where communication between the base station and the user terminal is replaced with communication among a plurality of user terminals (for example, which may be called Device-to-Device (D2D), Vehicle-to-Everything (V2X), etc.). In this case, the functions that the above-mentioned base station 10 has may be the configuration that the user terminal 20 has. Further, the words of "up", "down" and the like may be read with a word (e.g., "side") that corresponds to Device-to-Device communication. For example, the uplink channel, downlink channel and the like may be read with a side channel.

Similarly, the user terminal in the present disclosure may be read with the base station. In this case, the functions that the above-mentioned user terminal 20 has may be the configuration that the base station 10 has.

In the present disclosure, operation performed by the base station may be performed by an upper node thereof in certain case. In a network including one or a plurality of network nodes having the base station, it is obvious that various operations performed for communication with the terminal are capable of being performed by the base station, one or more network nodes (e.g., Mobility Management Entity (MME), Serving-Gateway (S-GW) and the like are considered, but the disclosure is not limited thereto) except the base station, or combination thereof.

Each Aspect/Embodiment explained in the present disclosure may be used alone, may be used in combination, or may be switched and used according to execution. Further, with respect to the processing procedure, sequence, flowchart and the like of each Aspect/Embodiment explained in the disclosure, unless there is a contradiction, the order may be changed. For example, with respect to the methods explained in the disclosure, elements of various steps are presented in illustrative order, and are not limited to the presented particular order.

Each Aspect/Embodiment explained in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (Registered Trademark)), CDMA 2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), system using another proper radio communication method, the next-generation system extended based thereon and the like. Further, a plurality of systems may be combined (e.g., combination of LTE or LTE-A and 5G, etc.) to apply.

The description of "based on" used in the present disclosure does not mean "based on only", unless otherwise specified. In other words, the description of "based on" means both of "based on only" and "based on at least".

Any references to elements using designations of "first", "second" and the like used in the present disclosure do not limit the amount or order of these elements overall. These designations are capable of being used in the disclosure as the useful method to distinguish between two or more elements. Accordingly, references of first and second elements do not mean that only two elements are capable of being adopted, or that the first element should be prior to the second element in any manner.

There is the case where the term of "determining" used in the present disclosure includes various types of operation. For example, "determining" maybe regarded as "determining" judging, calculating, computing, processing, deriving, investigating, looking up (search, inquiry) (e.g., looking up in a table, database or another data structure), ascertaining and the like.

Further, "determining" may be regarded as "determining" receiving (e.g., receiving information), transmitting (e.g., transmitting information), input, output, accessing (e.g., accessing data in memory) and the like.

Furthermore, "determining" may be regarded as "determining" resolving, selecting, choosing, establishing, comparing and the like. In other words, "determining" may be regarded as "determining" certain operation.

Still furthermore, "determining" may be read with "assuming", "expecting", "considering" and the like.

The terms of "connected" and "coupled" used in the present disclosure or any modifications thereof mean direct or indirect every connection or coupling among two or more elements, and are capable of including existence of one or more intermediate elements between two mutually "connected" or "coupled" elements. Coupling or connection between elements may be physical, may be logical or may be combination thereof. For example, "connection" may be read with "access".

In the present disclosure, in the case where two elements are connected, it is possible to consider that two elements are mutually "connected" or "coupled", by using one or more electric wires, cable, print electric connection, etc. and as certain non-limited and non-inclusive examples, electromagnetic energy having wavelengths in a radio frequency region, microwave region and light (both visible and invisible) region, or the like.

In the present disclosure, the term of "A and B are different" may mean that "A and B are different from each other". In addition, the term may mean that "each of A and B is different from C". The terms of "separate", "coupled" and the like may be interpreted in the same manner as "different".

In the case of using "include", "including", and modifications thereof in the present disclosure, as in the term of "comprising", these terms are intended to be inclusive. Further, the term of "or" used in the disclosure is intended to be not exclusive OR.

In the present disclosure, in the case where articles are added by translation, for example, as "a", "an" and "the" in English, the disclosure may include that nouns continued from these articles are in the plural.

As described above, the invention according to the present disclosure is described in detail, but it is obvious to a person skilled in the art that the invention according to the disclosure is not limited to the Embodiments described in the disclosure. The invention according to the disclosure is capable of being carried into practice as modified and changed aspects without departing from the subject matter and scope of the invention defined by the descriptions of the scope of the claims. Accordingly, the descriptions of the disclosure are intended for illustrative explanation, and do not provide the invention according to the disclosure with any restrictive meaning.

## Claims

1. A user terminal comprising:
a receiving section that receives information on a group corresponding to at least one of a Transmission Configuration Indication state (TCI state) and a spatial relation (TCI state/spatial relation); and
a control section that assumes that TCI states/spatial relations for all cells or Bandwidth Parts (BWPs) belonging to certain group are also updated when a TCI state/spatial relation for a given cell or a BWP belonging to the group is updated.

2. The user terminal according to claim 1, wherein when a TCI state/spatial relation for a first cell belonging to certain group is updated, the control section assumes that a TCI state/spatial relation for a second cell belonging to the group is updated to a TCI state/spatial relation having a given Quasi-Co-Location (QCL) relationship with a reference signal of an updated TCI state/spatial relation for the first cell.

3. The user terminal according to claim 1 or 2, wherein the control section assumes that a cell, on which notification of an update of the TCI state/spatial relation is received, is limited to a particular cell.

4. The user terminal according to claim 3, wherein when a reference signal of the first cell is configured, activated or indicated as a QCL source of a given QCL-Type of the TCI state/spatial relation for the second cell, the control section assumes that the cell on which notification of the update of the TCI state/spatial relation is received is limited to the first cell.

5. A radio communication method for a user terminal, comprising:
receiving information on a group corresponding to at least one of a Transmission Configuration Indication state (TCI state) and a spatial relation (TCI state/spatial relation); and
assuming that TCI states/spatial relations for all cells or Bandwidth Parts (BWPs) belonging to certain group are also updated when a TCI state/spatial relation for a given cell or a BWP belonging to the group is updated.
